# EUROPÄISCHE PATENTSCHRIFT

(11) **EP 3 356 618 B1**
(45) Veröffentlichungstag und Bekanntmachung des Hinweises auf die Patenterteilung: **27.04.2022**
(21) Anmeldenummer: 16774951.4
(22) Anmeldetag: 30.09.2016
(51) Int. Cl.: E04G 25/06, F16B 7/18

(54) **BAUSTÜTZE**
CONSTRUCTION SUPPORT
ÉTAI

(30) Priorität: 01.10.2015 DE 102015219043
(43) Veröffentlichungstag der Anmeldung: 08.08.2018
(73) Patentinhaber: DOKA GmbH, 3300 Amstetten (AT)
(72) Erfinder: HANDVEST, Werner, 89264 Weißendorn (DE)
(74) Vertreter: SONN Patentanwälte OG
(86) Internationale Anmeldenummer: PCT/EP2016/073436
(87) Internationale Veröffentlichungsnummer: WO 2017/055559

(56) Entgegenhaltungen:
- WO-A2-2007/039422
- DE-A1- 19 503 296
- DE-A1-102012 211 384

## Beschreibung

Die Erfindung betrifft eine Baustütze, mit einer axialen Längsrichtung, einer dazu konzentrischen Umfangsrichtung und einer radialen Richtung, mit einem in der Längsrichtung erstreckten Außenrohr, einem darin angeordneten in der Längsrichtung erstreckten und gegenüber dem Außenrohr in der Längsrichtung verstellbaren Innenrohr mit einem Außengewinde.

Derartige Baustützen sind in großem Umfang bekannt, vgl. zum Beispiel die Baustütze der WO 2007/039422 A2.

Der vorliegenden Erfindung liegt die Aufgabe zugrunde, eine Baustütze zu schaffen, die stabil und bedienungsfreundlich handhabbar und kostengünstig herstellbar ist.

Diese Aufgabe wird durch eine Baustütze mit den Merkmalen des Anspruchs 1 gelöst.

Gemäß der Erfindung ist das Außenrohr kostengünstig in einem Walzverfahren hergestellt. Im Zuge des Walzverfahrens wird das Rohr mit der mindestens einen nach radial innen öffnenden und in Längsrichtung erstreckten Führungsnut versehen. Durch die Führungsnut weist das Außenrohr ein unrundes Profil zur Aufnahme des Führungselements auf. Dadurch ist eine Verdrehsicherung des Innenrohrs in dem Außenrohr realisiert.

Bei der erfindungsgemäßen Ausbildung der Baustütze erfolgt die Verstellung des Innenrohrs in Längsrichtung relativ zum Außenrohr, und damit die Längsverstellung der Baustütze, durch Drehen der Stellmutter. Das Innenrohr wird dadurch translatorisch in Längsrichtung relativ zu dem Außenrohr verstellt, wobei das Führungselement des Innenrohrs axial in der Führungsnut des Außenrohrs gleitet. Gleichzeitig wird durch die Stellmutter das Innenrohr in axialer Längsrichtung fixiert, und ein unerwünschtes translatorisches Ein- bzw. Ausfallen des Innenrohrs in bzw. aus dem Außenrohr wird sicher verhindert.

Es erweist sich als besonders vorteilhaft, wenn das Außenrohr aus einer Stahllegierung gefertigt und zum Schutz vor Korrosion vorzugsweise verzinkt ist.

Das Innenrohr ist vorzugsweise aus einer Stahllegierung gefertigt. Es erweist sich als vorteilhaft, wenn das Innenrohr auch in einem Walzverfahren und in verzinkter Ausführung hergestellt ist.

Das Außengewinde des Innenrohrs ist vorteilhafterweise in einem spanlosen Formgebungsverfahren, insbesondere einem Gewinde-Walzverfahren oder einem Gewinde-Rollverfahren, hergestellt.

Es erweist sich als ganz besonders vorteilhaft, dass das Außenrohr mehrere, vorzugsweise zwei, drei oder vier, in der Längsrichtung erstreckte Führungsnuten umfasst, und dass das Innenrohr dementsprechend mehrere, vorzugsweise zwei, drei oder vier, in diese Führungsnuten eingreifende Führungselemente aufweist. Durch die in die Führungsnuten eingreifenden Führungselemente ist das Innenrohr in Umfangsrichtung verdrehsicher im Außenrohr angeordnet.

Das Führungselement des Innenrohrs kann in vielfacher Weise realisiert sein. Denkbar ist, dass das Führungselement durch Hinzufügen von Material, beispielsweise durch Anschweißen von flügelartigen Erweiterungselementen ausgebildet ist. Vorzugsweise ist das Führungselement durch eine nach radial außen gerichtete Verformung von Material des Innenrohrs, zum Beispiel durch punktförmige Materialverformung in Form einer nach radial außen gedrückten Warze, gebildet. Gemäß einer bevorzugten Ausführungsform wird das Führungselement einstückig aus dem Material des Innenrohrs durch Einschneiden und nach radial außen Aufweiten oder Umbiegen geformt.

Bei einer weiteren bevorzugten Ausführungsform ist das Führungselement von wenigstens einem, vorzugsweise zwei, Stiften gebildet. Die Stifte sind durch eine jeweilige Öffnung im Innenrohr hindurchgesteckt und stehen nach radial außen vor.

Um eine axiale Verstellbarkeit des Innenrohrs relativ zu dem Außenrohr über eine möglichst große Weglänge zu gewährleisten, erweist es sich als vorteilhaft, dass sich das Außengewinde des Innenrohrs über eine möglichst große Länge des Innenrohrs erstreckt.

Weiter erweist es sich als besonders vorteilhaft, dass das Führungselement in oder an einem in dem Außenrohr angeordneten Längsendbereich des Innenrohrs ausgebildet ist. Vorzugsweise erstreckt sich dieser Längsendbereich des Innenrohrs von einem in dem Außenrohr angeordneten Ende des Innenrohrs über 30cm in Längsrichtung und das Führungselement ist innerhalb des Längsendbereichs angeordnet.

Um ein unbeabsichtigtes Ausdrehen der Stellmutter zu verhindern, ist es denkbar, dass das Außengewinde des Innenrohrs durch einen Schweißpunkt oder Quetschung begrenzt ist. In einer bevorzugten Ausführungsform ist am Innenrohr ein gewindefreier Teil vorgesehen. Insbesondere endet das Außengewinde in einem Bereich von wenigstens 30 cm vor dem Ende des Innenrohrs.

Wie eingangs erwähnt, ist die Stellmutter verliersicher am Außenrohr angeordnet. Erfindungsgemäß ist die Stellmutter mittels eines Sicherungselements in axialer Richtung formschlüssig, jedoch spielbehaftet und in Umfangsrichtung drehbar am Außenrohr angeordnet. Das Sicherungselement ist erfindungsgemäß in axialer Richtung formschlüssig an dem Außenrohr gehalten.

Erfindungsgemäß ist das Sicherungselement ein das Außenrohr umfassender Sicherungsring.

Bei einer besonders bevorzugten Ausführungsform weist das Außenrohr im Längsendbereich einen Stützabschnitt zur Anlage des Sicherungselements von axial unten auf. Der Stützabschnitt kann auf verschiedene Weise, insbesondere durch Hinzufügen von Material, beispielsweise durch Anschweißen von flügelartigen oder ringförmigen Erweiterungsstücken realisiert sein. Vorzugsweise ist der Stützabschnitt durch eine nach radial außen gerichtete Verformung von Material des Außenrohrs gebildet. Besonders bevorzugt ist der Stützabschnitt einstückig aus Material des Außenrohrs, vorzugsweise durch Einschneiden und Umbiegen, gebildet. Es ist durchaus denkbar, dass die Stellmutter auf dem Stützabschnitt des Außenrohrs von axial oben aufsitzt.

Nach Einführen des Innenrohrs in das Außenrohr, wird die Stellmutter mit dem Sicherungselement formschlüssig verbunden. Vorteilhafterweise weist das Sicherungselement wenigstens einen nach radial innen in eine axiale Hintergriffstellung mit der der Stellmutter umlegbaren Ansatz auf. Denkbar ist, dass der nach radial innen umlegbare Ansatz des Sicherungselements mit einem Rand der Stellmutter aufgebördelt ist. Vorzugsweise greift der nach radial innen umlegbare Ansatz in eine Umfangsnut der Stellmutter formschlüssig ein.

In einer weiteren nicht erfindungsgemäßen Ausführungsform bildet der Längsendbereich des Außenrohrs selbst ein Sicherungselement für die Stellmutter. Der Längsendbereich weist dazu umlegbare Mittel auf. Denkbar ist, dass die umlegbaren Mittel durch Hinzufügen von Material, beispielsweise durch Anschweißen von flanschartigen Abschnitten, ausgebildet sind. Vorzugsweise sind die umlegbaren Mittel von einer nach radial außen gerichteten Verformung einstückig aus dem Material des Außenrohrs gebildet.

Gemäß einer nicht erfindungsgemäßen Ausführungsform sind die umlegbaren Mittel des Längsendbereichs wenigstens ein nach radial außen vorstehender Abschnitt mit wenigstens einem nach radial innen in eine axiale Hintergriffstellung mit der Stellmutter umlegbaren Ansatz. Vorzugsweise greift der nach radial innen umlegbare Ansatz in eine Umfangsnut der Stellmutter ein.

Ferner erweist es sich als ganz besonders vorteilhaft, wenn die Stellmutter mehrere, vorzugsweise drei oder vier, Werkzeugansetzstellen, insbesondere flügelartige Hammeranschlagflächen, umfasst.

Für den zweckmäßigen Einsatz der Baustütze erweist es sich als vorteilhaft, wenn das Außenrohr und das Innenrohr eine Aufnahme für eine Fußplatte und eine Kopfplatte aufweisen und die Fuß- und Kopfplatte derart ausgebildet ist, dass ein weiteres Fuß- und Kopfteil, insbesondere zentrisch, daran befestigt werden kann.

Bevorzugte Weiterbildungen sind in den abhängigen Ansprüchen beschrieben, für die in beliebiger Kombination Schutz in Anspruch genommen wird. Einzelheiten ergeben sich aus der zeichnerischen Darstellung und nachfolgenden Beschreibung eines bevorzugten Ausführungsbeispiels der erfindungsgemäßen Baustütze. In der Zeichnung zeigt:
Figur 1 einen Ausschnitt einer Seitenansicht der erfindungsgemäßen Baustütze gemäß einer bevorzugten Ausführungsform;
Figur 2a eine Seitenansicht eines Außenrohrs;
Figur 2b einen Querschnitt durch ein Außenrohr;
Figur 2c eine Detailansicht eines Außenrohrs;
Figur 3a eine Seitenansicht eines Innenrohrs;
Figur 3b einen Querschnitt durch ein Innenrohr;
Figur 3c einen Querschnitt durch ein Innenrohr gemäß einer weiteren Ausführungsform;
Figur 4a eine Seitenansicht einer Stellmutter gemäß einer bevorzugten Ausführungsform;
Figur 4b eine Draufsicht aus axialer Richtung auf eine Stellmutter gemäß Fig. 4a;
Figur 5 eine geschnittene Seitenansicht einer erfindungsgemäßen Baustütze;
Figur 6a eine Seitenansicht eines Sicherungselements gemäß einer bevorzugten Ausführungsform, und
Figur 6b eine Draufsicht aus axialer Richtung auf ein Sicherungselement gemäß Fig. 6a;
Figur 6c eine Seitenansicht eines Sicherungselements gemäß einer nicht erfindungsgemäßen Ausführungsform;
Figur 6d eine Seitenansicht eines Sicherungselements gemäß Fig. 6c mit einer Stellmutter;

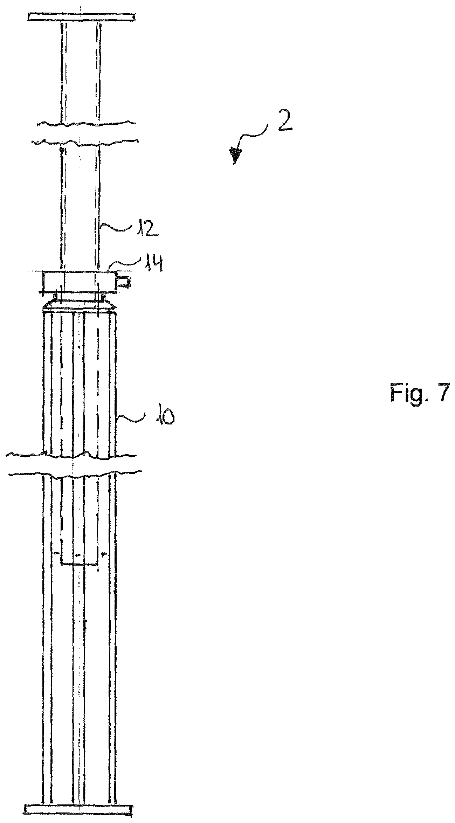

Figur 7 eine Seitenansicht der erfindungsgemäßen Baustütze gemäß einer bevorzugten Ausführungsform.

Die Figuren zeigen eine insgesamt mit dem Bezugszeichen 2 bezeichnete Baustütze mit einer axialen Längsrichtung 4, einer dazu konzentrischen Umfangsrichtung 6 und einer radialen Richtung 8. Die Baustütze 2 umfasst ein in der Längsrichtung 4 erstrecktes Außenrohr 10 und ein darin angeordnetes Innenrohr 12. Ferner umfasst die Baustütze 2 eine Stellmutter 14, die in einem Längsendbereich 16 des Außenrohrs 10 auf noch näher zu beschreibende Weise verliersicher, jedoch in Umfangsrichtung 6 drehbar angeordnet ist und mittels derer das Innenrohr 12 relativ zum Außenrohr 10 in der axialen Längsrichtung 4 verstellbar ist.

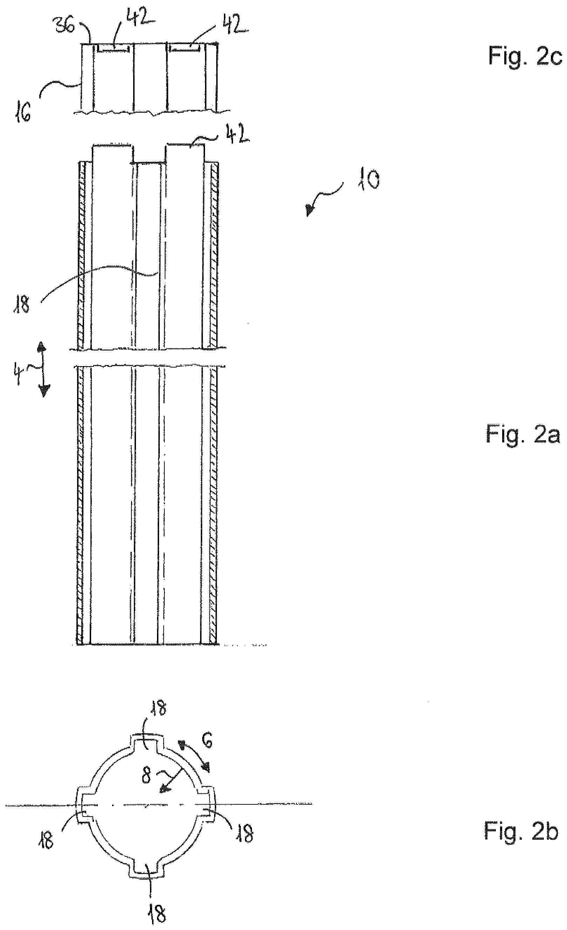

Das Außenrohr 10 ist im Zuge der Walzherstellung mit mindestens einer und nach einer bevorzugten Ausführungsform gemäß den Figuren 2a und 2b mit vier in axialer Richtung 4 erstreckten Längsführungsnuten 18 versehen und weist dadurch ein unrundes Profil auf. Die Längsführungsnuten 18 öffnen nach radial innen und sind um jeweils 90° versetzt zueinander angeordnet. Sind zwei bzw. drei Längsführungsnuten 18 vorgesehen, kann es aus Symmetriegründen zweckmäßig sein, diese diametral gegenüber bzw. um 120° zueinander versetzt anzuordnen.

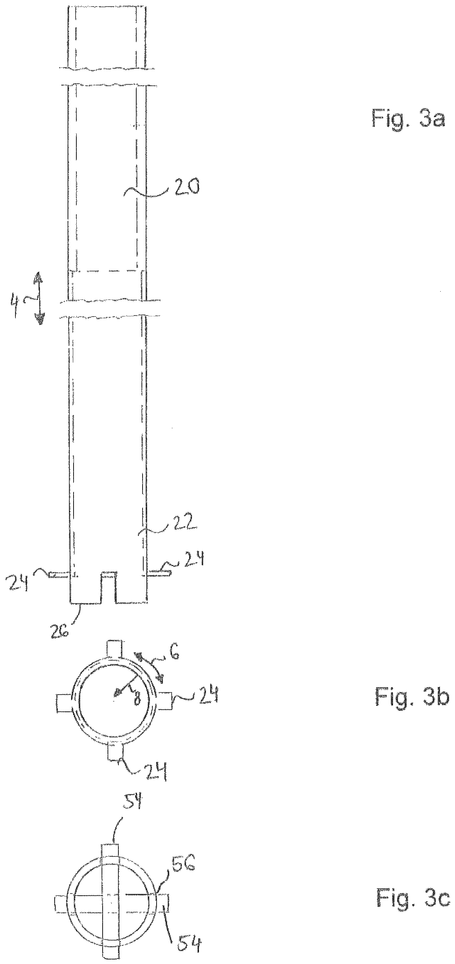

Das Innenrohr 12 ist ein Rundrohr mit einem Außengewinde 20. Es ist bei einer bevorzugten Ausführungsform nach Figuren 3a und 3b in einem gewindefreien Längsendbereich 22 mit vier nach radial außen vorstehenden Führungselementen 24 versehen. Die Führungselemente 24 sind entsprechend den Längsführungsnuten 18 um jeweils 90° versetzt zueinander angeordnet. Die Führungselemente 24 sind einstückig aus Material des Innenrohrs 12 durch Einschneiden an einem unteren Rand 26 und Umbiegen nach radial innen gebildet. Ist das Innenrohr 12 in dem Außenrohr 10 eingesteckt, greifen die Führungselemente 24 von radial innen in die Längsführungsnuten 18 ein. Das Innenrohr 12 ist dadurch verdrehsicher in dem Außenrohr 10 angeordnet.

In einer weiteren bevorzugten Ausführungsform gemäß Fig. 3c sind die Führungselemente 24 von zwei Stiften 54 gebildet. Die Stifte 54 sind durch eine jeweilige Öffnung 56 im Innenrohr 12 hindurchgesteckt und stehen nach radial außen vor. Ist das Innenrohr 12 in dem Außenrohr 10 eingesteckt, greifen die die nach radial außen vorstehenden Stifte 54 von radial innen in die Längsführungsnuten 18 ein. Das Innenrohr 12 ist dadurch verdrehsicher in dem Außenrohr 10 angeordnet.

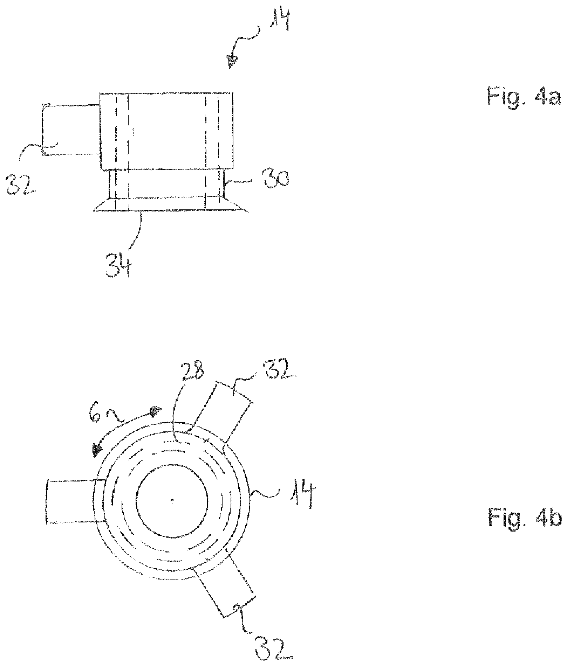

Die Stellmutter 14 umfasst ein auf das Außengewinde 20 des Innenrohrs 12 aufschraubbares Innengewinde 28 und eine Umfangsnut 30. Ferner umfasst die Stellmutter 14 gemäß einer bevorzugten Ausführungsform nach Figur 4b mehrere, insbesondere drei, Werkzeugansetzstellen 32. Als vorteilhaft erweisen sich flügelartige Hammeranschlagsflächen.

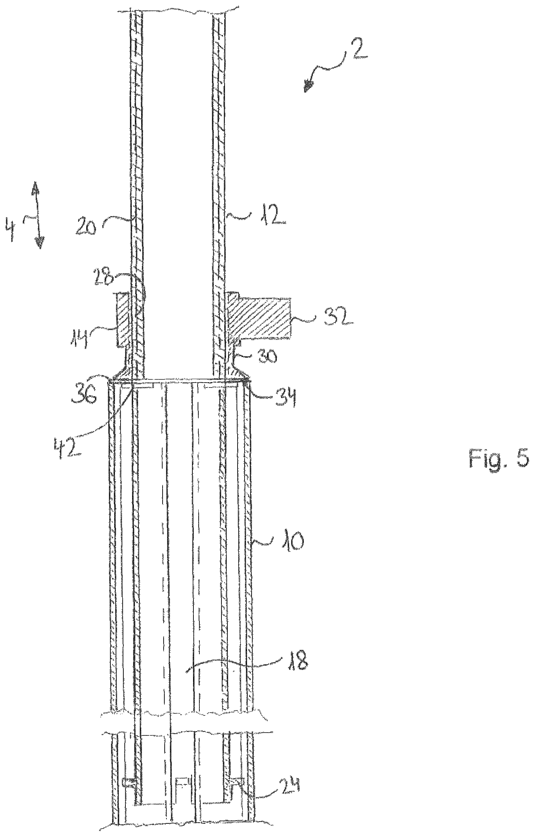

Figur 5 zeigt die erfindungsgemäße Baustütze 2, wobei das Innenrohr 12 in dem Außenrohr 10 angeordnet ist. Die Stellmutter 14 ist auf das Innenrohr aufgeschraubt und sitzt gemäß der in Figur 5 gezeigten Position mit einem unteren Ende 34 auf einem oberen Ende 36 im Längsendbereich 16 des Außenrohrs 10 auf. Die Führungselemente 24 des Innenrohrs 12 greifen in die Längsführungsnuten 18 des Außenrohrs 10 ein. Durch Drehen der Stellmutter 14 verstellt sich das Innenrohr 12 in axialer Längsrichtung 4 relativ zu dem Außenrohr 10. Die Führungselemente 24 gleiten in den Längsführungsnuten 18, dadurch bewegt sich das Innenrohr 12 durch Drehen der Stellmutter 14 translatorisch relativ zum Außenrohr 10. Gleichzeitig wird das in die Stellmutter 14 eingeschraubte Innenrohr 12, von der Stellmutter 14 in axialer Längsrichtung 4 fixiert, da die Stellmutter 14 auf noch näher zu beschreibende Weise verliersicher am Außenrohr 10 gehalten ist. Ein unerwünschtes translatorisches Ein- bzw. Ausfallen des Innenrohrs 12 in bzw. aus dem Außenrohr 10 verhindert, da sich das Innenrohr 12 nur über das Drehen der Stellmutter 14 in Längsrichtung 4 verstellen lässt.

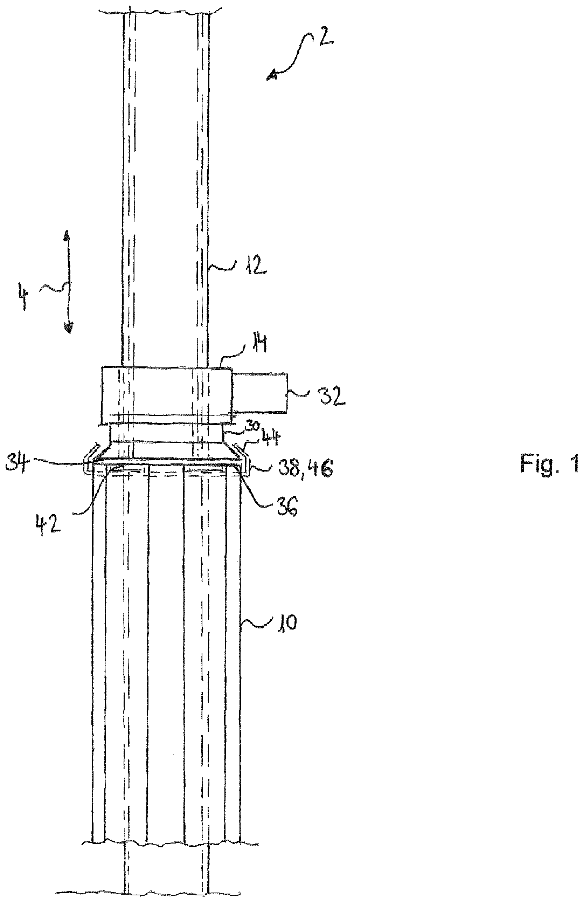

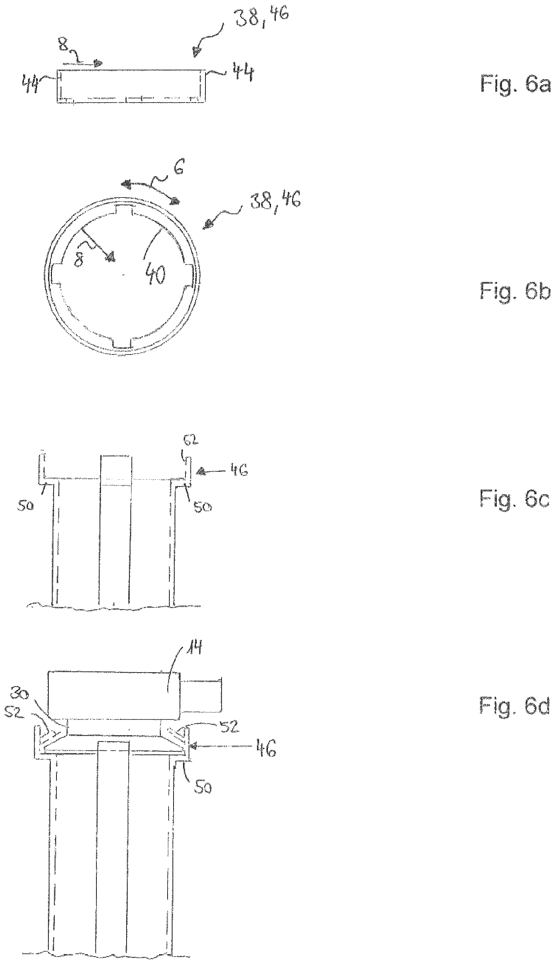

Die Stellmutter 14 ist gemäß Figur 1 mittels eines Sicherungsrings 38 in axialer Richtung formschlüssig, jedoch spielbehaftet und in Umfangsrichtung drehbar am Außenrohr 10 angeordnet. Der Sicherungsring 38 umfasst das Außenrohr 10 und weist gemäß Figur 6b ein mit dem unrunden Profil des Außenrohrs 10 zusammenwirkendes Innenprofil 40 auf.

Bei einer bevorzugten Ausführungsform sind am Außenrohr 10 Stützabschnitte 42 vorgesehen. Insbesondere die Figuren 2a und 2c zeigen die Stützabschnitte 42 im Längsendbereich 16 des Außenrohrs 10. Vorzugsweise sind die Stützabschnitte 42 einstückig aus Material des Außenrohrs gebildet. Das Außenrohr 10 wird von axial oben im Bereich zwischen den Längsführungsnuten 18 eingeschnitten, sodass vier zungenartige Abschnitte stehen bleiben. Diese werden derart gebogen, dass sie nach radial außen abstehende Stützabschnitte 42 bilden. Vorzugsweise wird zuerst der Sicherungsring 38 von axial oben auf das Außenrohr gesteckt und anschließend die Stützabschnitte 42 ausgebildet, sodass der Sicherungsring 38 von axial unten an den Stützabschnitten 42 anliegt. Ist das Innenrohr 12 mit der aufgeschraubten Stellmutter 14 gemäß Figur 1 in dem Außenrohr positioniert, sitzt die Stellmutter 14 von axial oben auf den Stützabschnitten 42 auf und die nach radial innen umlegbaren Ansätze 44 des Sicherungsrings 38 werden derart nach radial innen gebogen, dass die Ansätze 44 in eine Umfangsnut 30 der Stellmutter 14 eingreifen. Die Stellmutter 14 ist also über den von axial unten an den Stützabschnitten 42 anliegenden Sicherungsring und über die in die Umfangsnut 30 eingreifenden Ansätze 44 des Sicherungsrings verliersicher am Außenrohr 10 gehalten. Die Ansätze 44 greifen derart spielbehaftet in die Umfangsnut 30 ein, sodass die Stellmutter 14 in Umfangsrichtung 6 verdrehbar ist, und das Innenrohr 12 durch Drehen der Stellmutter 14 relativ zum Außenrohr 10 in Längsrichtung 4 verstellbar ist.

Gemäß einer nicht erfindungsgemäßen Ausführungsform ist das Sicherungselement 46 von dem Längsendbereich 16 des Außenrohrs 10 gebildet. Die Fig. 6c und 6d zeigen den Längsendbereich 16 des Außenrohrs mit umlegbaren Mittel 48. Das Außenrohr 10 wird von axial oben im Bereich zwischen den Längsführungsnuten 18 eingeschnitten, sodass mehrere umlegbare Mittel 48 stehen bleiben. Diese werden derart gebogen, dass sie nach radial außen stehende Abschnitte 50 mit nach radial innen umlegbaren Ansätzen 52 bilden. Die nach radial innen umlegbaren Ansätze 52 greifen derart spielbehaftet in die Umfangsnut 30 ein, sodass die Stellmutter 14 in Umfangsrichtung 6 verdrehbar ist, und das Innenrohr 12 durch Drehen der Stellmutter 14 relativ zum Außenrohr 10 in Längsrichtung 4 verstellbar ist.

## Patentansprüche

1. Baustütze (2), mit einer axialen Längsrichtung (4), einer dazu konzentrischen Umfangsrichtung (6) und einer radialen Richtung (8), mit einem in der Längsrichtung (4) erstreckten Außenrohr (10), einem darin angeordneten in der Längsrichtung (4) erstreckten und gegenüber dem Außenrohr (10) in der Längsrichtung (4) verstellbaren Innenrohr (12) mit einem Außengewinde (20),
**wobei** das Außenrohr (10) ein unrundes gewalztes Rohr ist,
wobei das Außenrohr (10) im Zuge der Walz-Herstellung mit wenigstens einer in der Längsrichtung (4) erstreckten und nach radial innen öffnenden Führungsnut (18) versehen ist,
wobei das Innenrohr (12) ein Rundrohr ist und wenigstens ein nach radial außen vorstehendes Führungselement (24) aufweist, welches in die nach radial innen geöffnete Führungsnut (18) eingreift, sodass das Innenrohr (12) dadurch in Umfangsrichtung (6) formschlüssig verdrehsicher im Außenrohr (10) angeordnet ist, und
wobei in einem Längsendbereich (16) des Außenrohrs (10) verliersicher, jedoch in Umfangsrichtung (6) drehbar eine Stellmutter (14) mit einem mit dem Außengewinde (20) des Innenrohrs (12) verschraubbaren Innengewinde (28) angeordnet ist,
wobei die Stellmutter (14) mittels eines in axialer Richtung (4) formschlüssig an dem Außenrohr (10) gehaltenen Sicherungselements (46) in axialer Richtung (4) formschlüssig, jedoch spielbehaftet und in Umfangsrichtung (6) drehbar am Außenrohr (10) angeordnet ist und verliersicher am Außenrohr (10) gehalten wird, wobei das Sicherungselement (46) ein das Außenrohr (10) umfassender Sicherungsring (38) ist und
wobei durch Drehen der Stellmutter (14) das Innenrohr (12) relativ zu dem Außenrohr (10) in Längsrichtung (4) verstellbar ist, wobei das Führungselement (24) in der Führungsnut (18) gleitet.

2. Baustütze (2) nach Anspruch 1, **dadurch gekennzeichnet, dass** das Außenrohr (10) aus einer Stahllegierung gefertigt und vorzugsweise verzinkt ist.

3. Baustütze (2) nach Anspruch 1 oder 2, **dadurch gekennzeichnet, dass** das Innenrohr (12) vorzugsweise aus einer Stahllegierung gefertigt ist.

4. Baustütze (2) nach einem oder mehreren der vorhergehenden Ansprüche, **dadurch gekennzeichnet, dass** das Außengewinde (20) des Innenrohrs (12) in einem spanlosen Formgebungsverfahren, insbesondere einem Gewinde-Walzverfahren oder einem Gewinde-Rollverfahren, hergestellt ist.

5. Baustütze (2) nach einem oder mehreren der vorhergehenden Ansprüche, **dadurch gekennzeichnet, dass** das Außenrohr (10) mehrere, vorzugsweise zwei, drei oder vier, in der Längsrichtung (4) erstreckte Führungsnuten (18) umfasst, und dass das Innenrohr (12) dementsprechend mehrere, vorzugsweise zwei, drei oder vier, in diese Führungsnuten (18) eingreifende Führungselemente (24) aufweist.

6. Baustütze (2) nach einem oder mehreren der vorhergehenden Ansprüche, **dadurch gekennzeichnet, dass** das Führungselement (24) des Innenrohrs (12) durch eine nach radial außen gerichtete Verformung von Material des Innenrohrs (12) gebildet ist.

7. Baustütze (2) nach einem oder mehreren der vorhergehenden Ansprüche, **dadurch gekennzeichnet, dass** das Führungselement (24) durch Einschneiden und anschließend nach außen Aufweiten oder Umbiegen von Material des Innenrohrs (12) gefertigt ist.

8. Baustütze (2) nach einem oder mehreren der vorhergehenden Ansprüche, **dadurch gekennzeichnet, dass** das Führungselement (24) in oder an einem in dem Außenrohr (10) angeordneten Längsendbereich (22) des Innenrohrs (12) ausgebildet ist.

9. Baustütze (2) nach einem oder mehreren der vorhergehenden Ansprüche, **dadurch gekennzeichnet, dass** das Führungselement (24) von wenigstens einem durch eine Öffnung (56) im Innenrohr (12) hindurchgesteckten und nach radial außen vorstehenden Stift (54) gebildet ist.

10. Baustütze (2) nach einem oder mehreren der vorhergehenden Ansprüche, **dadurch gekennzeichnet, dass** das Außenrohr (10) im Längsendbereich (16) einen Stützabschnitt (42) zur Anlage des Sicherungselements (46) von axial unten aufweist, und dass der Stützabschnitt (42) vorzugsweise durch Einschneiden und Umbiegen von Material des Außenrohrs (10) ausgebildet ist.

11. Baustütze (2) nach einem oder mehreren der vorhergehenden Ansprüche, **dadurch gekennzeichnet, dass** das Sicherungselement (46) wenigstens einen, vorzugsweise mehrere, nach radial innen umlegbare Ansätze (44) aufweist, die die Stellmutter (14) axial hintergreifen, vorzugweise in eine Umfangsnut (30) der Stellmutter eingreifen.

12. Baustütze (2) nach einem oder mehreren der vorhergehenden Ansprüche, **dadurch gekennzeichnet, dass** die Stellmutter (14) mehrere, insbesondere drei, Werkzeugansetzstellen (32), insbesondere flügelartige Hammeranschlagflächen, umfasst.

13. Baustütze (2) nach einem oder mehreren der vorhergehenden Ansprüche, **dadurch gekennzeichnet, dass** das Außenrohr (10) und/oder Innenrohr (12) eine Aufnahme für eine Fußplatte und/oder eine Kopfplatte aufweisen und die Fuß- und/oder Kopfplatte derart ausgebildet ist, dass ein weiteres Fuß- und/oder Kopfteil, insbesondere zentrisch, daran befestigt werden kann.

## Claims

1. A construction support (2), having an axial longitudinal direction (4), a circumferential direction (6) concentric therewith, and a radial direction (8), comprising an outer tube (10) extending in the longitudinal direction (4), an inner tube (12) disposed therein, extending in the longitudinal direction (4), being adjustable relative to the outer tube (10) in the longitudinal direction (4) and having an external thread (20),
**wherein** the outer tube (10) is a non-circular rolled tube,
wherein the outer tube (10) is provided in the course of rolling production with at least one guide groove (18) extending in the longitudinal direction (4) and opening radially inwards,
wherein the inner tube (12) is a round tube and has at least one radially outwardly projecting guide element (24) which engages in the radially inwardly open guide groove (18), so that the inner tube (12) is thereby arranged in the outer tube (10) in a form-locking manner in the circumferential direction (6), and
wherein an adjusting nut (14) with an internal thread (28) which can be screwed to the external thread (20) of the inner tube (12) is arranged in a longitudinal end region (16) of the outer tube (10) so as to be secure against loss but rotatable in the circumferential direction (6),
wherein the adjusting nut (14) is arranged on the outer tube (10) by means of a securing element (46) held on the outer tube (10) in a form-locking manner in the axial direction (4) but with play and rotatably in the circumferential direction (6) and is held on the outer tube (10) in a manner precluding loss, wherein the securing element (46) is a securing ring (38) surrounding the outer tube (10), and
wherein by turning the adjusting nut (14) the inner tube (12) is adjustable relative to the outer tube (10) in longitudinal direction (4), wherein the guide element (24) slides in the guide groove (18).

2. Construction support (2) according to claim 1, **characterized in that** the outer tube (10) is made of a steel alloy and is preferably galvanized.

3. Construction support (2) according to claim 1 or 2, **characterized in that** the inner tube (12) is preferably made of a steel alloy.

4. Construction support (2) according to one or more of the preceding claims, **characterized in that** the external thread (20) of the inner tube (12) is produced in a non-cutting forming process, in particular a thread rolling process or a thread rolling process.

5. Construction support (2) according to one or more of the preceding claims, **characterized in that** the outer tube (10) comprises a plurality of, preferably two, three or four, guide grooves (18) extending in the longitudinal direction (4), and that the inner tube (12) accordingly comprises a plurality of, preferably two, three or four, guide elements (24) engaging in said guide grooves (18).

6. Construction support (2) according to one or more of the preceding claims, **characterized in that** the guide element (24) of the inner tube (12) is formed by a radially outwardly directed deformation of material of the inner tube (12).

7. Construction support (2) according to one or more of the preceding claims, **characterized in that** the guide element (24) is manufactured by cutting into and then outwardly expanding or bending over material of the inner tube (12).

8. Construction support (2) according to one or more of the preceding claims, **characterized in that** the guide member (24) is formed in or on a longitudinal end portion (22) of the inner tube (12) disposed in the outer tube (10).

9. Construction support (2) according to one or more of the preceding claims, **characterized in that** the guide element (24) is formed by at least one pin (56) inserted through an opening (54) in the inner tube (12) and projecting radially outwards.

10. Construction support (2) according to one or more of the preceding claims, **characterized in that** the outer tube (10) has a support section (42) in the longitudinal end region (16) for abutment of the securing element (46) from axially below, and **in that** the support section (42) is preferably formed by cutting and bending over material of the outer tube (10).

11. Construction support (2) according to one or more of the preceding claims, **characterized in that** the securing element (46) has at least one, preferably several, radially inwardly foldable lugs (44) which engage axially behind the adjusting nut (14), preferably in a circumferential groove (30) of the adjusting nut.

12. Construction support (2) according to one or more of the preceding claims, **characterized in that** the adjusting nut (14) comprises a plurality of, in particular three, tool attachment surfaces (32), in particular wing-like hammer attachment surfaces.

13. Construction support (2) according to one or more of the preceding claims, **characterized in that** the outer tube (10) and/or inner tube (12) have a receptacle for a foot plate and/or a head plate and the foot plate and/or head plate is designed in such a way that a further foot part and/or head part can be fastened thereto, in particular centrally.

## Revendications

1. Etai (2) avec un sens longitudinal (4) axial, un sens périphérique (6) concentrique par rapport à celui-ci et un sens radial (8), avec un tube externe (10) s'étendant dans le sens longitudinal (4), un tube interne (12) disposé dans celui-ci, s'étendant dans le sens longitudinal (4) et ajustable dans le sens longitudinal (4) par rapport au tube externe (10) avec un filetage extérieur (20),
dans lequel le tube externe (10) est un tube laminé non rond,
dans lequel le tube externe (10) est pourvu, dans le cadre de la fabrication par laminage, d'au moins une rainure de guidage (18) s'étendant dans le sens longitudinal (4) et s'ouvrant vers l'intérieur radialement,
dans lequel le tube interne (12) est un tube rond et présente au moins un élément de guidage (24) faisant saillie vers l'extérieur radialement, lequel vient en prise avec la rainure de guidage (18) ouverte vers l'intérieur radialement, si bien que le tube interne (12) est disposé dans le tube externe (10) de manière bloquée en rotation par complémentarité de forme dans le sens périphérique (6), et
dans lequel un écrou de réglage (14) avec un filetage intérieur (28) pouvant être vissé avec le filetage extérieur (20) du tube interne (12) est disposé de manière bloquée en rotation dans une zone d'extrémité longitudinale (16) du tube externe (10), de manière à pouvoir tourner toutefois dans le sens périphérique (6), dans lequel l'écrou de réglage (14) est disposé, au moyen d'un élément de blocage (46) maintenu par complémentarité de forme sur le tube externe (10) dans un sens axial (4), sur le tube externe (10) par complémentarité de forme dans un sens axial (4), toutefois avec du jeu et de manière à pouvoir tourner dans le sens périphérique (6) et est maintenu sur le tube externe (10) de manière bloquée en rotation, dans lequel l'élément de blocage (46) est une bague de blocage (38) comprenant le tube externe (10), et dans lequel le tube interne (12) peut être ajusté par rapport au tube externe (10) dans le sens longitudinal (4) par la rotation de l'écrou de réglage (14), dans lequel l'élément de guidage (24) glisse dans la rainure de guidage (18) .

2. Etai (2) selon la revendication 1, **caractérisé en ce que** le tube externe (10) est produit et de préférence est galvanisé à partir d'un alliage en acier.

3. Etai (2) selon la revendication 1 ou 2, **caractérisé en ce que** le tube interne (12) est produit de préférence à partir d'un alliage en acier.

4. Etai (2) selon l'une quelconque ou plusieurs des revendications précédentes, **caractérisé en ce que** le filetage extérieur (20) du tube interne (12) est fabriqué dans un procédé de mise en forme sans copeaux, en particulier dans un procédé de laminage de filetage ou dans un procédé de roulage de filetage.

5. Etai (2) selon l'une quelconque ou plusieurs des revendications précédentes, **caractérisé en ce que** le tube externe (10) comprend plusieurs rainures de guidage (18), de préférence deux, trois ou quatre, s'étendant dans le sens longitudinal (4), et que le tube interne (12) présente de manière correspondante plusieurs, de préférence deux, trois ou quatre, éléments de guidage (24) venant en prise avec lesdites rainures de guidage (18).

6. Etai (2) selon l'une quelconque ou plusieurs des revendications précédentes, **caractérisé en ce que** l'élément de guidage (24) du tube interne (12) est formé par une déformation, dirigée vers l'extérieur radialement, de matériau du tube interne (12).

7. Etai (2) selon l'une quelconque ou plusieurs des revendications précédentes, **caractérisé en ce que** l'élément de guidage (24) est produit par incision puis par élargissement vers l'extérieur ou cintrage de matériau du tube interne (12).

8. Etai (2) selon l'une quelconque ou plusieurs des revendications précédentes, **caractérisé en ce que** l'élément de guidage (24) est réalisé dans ou sur une zone d'extrémité longitudinale (22), disposée dans le tube externe (10), du tube interne (12).

9. Etai (2) selon l'une quelconque ou plusieurs des revendications précédentes, **caractérisé en ce que** l'élément de guidage (24) est formé par au moins une tige (54) enfichée à travers une ouverture (56) dans le tube interne (12) de part en part et faisant saillie vers l'extérieur radialement.

10. Etai (2) selon l'une quelconque ou plusieurs des revendications précédentes, **caractérisé en ce que** le tube externe (10) présente dans la zone d'extrémité longitudinale (16) une section de support (42) pour l'appui de l'élément de blocage (46) depuis le bas axialement, et que la section de support (42) est réalisée de préférence par incision et par cintrage de matériau du tube externe (10) .

11. Etai (2) selon l'une quelconque ou plusieurs des revendications précédentes, **caractérisé en ce que** l'élément de blocage (46) présente au moins un, de préférence plusieurs appendices (44) pouvant être repliés vers l'intérieur radialement, qui viennent en prise par l'arrière axialement avec l'écrou de réglage (14), de préférence viennent en prise avec une rainure périphérique (30) de l'écrou de réglage.

12. Etai (2) selon l'une quelconque ou plusieurs des revendications précédentes, **caractérisé en ce que** l'écrou de réglage (14) comprend plusieurs, en particulier trois emplacements de placement d'outil (32), en particulier des surfaces de butée de marteau de type aile.

13. Etai (2) selon l'une quelconque ou plusieurs des revendications précédentes, **caractérisé en ce que** le tube externe (10) et/ou le tube interne (12) présentent un logement pour une plaque de base et/ou une plaque de tête et la plaque de base et/ou de tête sont réalisées de telle manière qu'une autre partie de base et/ou de tête peuvent y être fixées en particulier de manière centrée.
